# EUROPEAN PATENT SPECIFICATION

(11) **EP 4 269 188 B1**
(45) Date of publication and mention of the grant of the patent: **18.09.2024**
(21) Application number: 22170037.0
(22) Date of filing: 26.04.2022
(51) Int. Cl.: B60S 1/38

(54) **WIPER**
WISCHER
ESSUIE-GLACE

(43) Date of publication of application: 01.11.2023
(73) Proprietor: Danyang UPC Auto Parts Co., Ltd., 212300 Danyang, Zhenjiang, Jiangsu (CN)
(72) Inventor: CHANG, Che-Wei, 22069 New Taipei City (TW); YANG, Cheng-Kai, 22069 New Taipei City (TW)
(74) Representative: 2K Patentanwälte Blasberg Kewitz & Reichel

(56) References cited:
- DE-A1- 10 130 381
- DE-A1- 102006 038 828
- DE-A1- 102013 226 561
- JP-A- 2011 240 829
- US-A1- 2013 117 957

## Description

### BACKGROUND OF THE DISCLOSURE

### Technical Field

The technical field relates to a wiper, and more particularly relates to a wiper with a flow guiding cover having a horizontal pressing rib.

### Description of Related Art

In general, most wipers are attached to a wiper arm and pressed on a windshield by the wiper arm, and the windshield is usually a curved surface. In order to allow the wiper to be well attached on the windshield during the wiping process, the wiper itself is designed as an elastic curved strip with a radius of curvature smaller than the minimum radius of curvature of the windshield, so that its concave side can be attached onto the windshield very well, and the mid-point of the wiper can be pressed by the wiper arm and attached to the windshield and both ends of the wiper can press against the windshield by the elasticity of the wiper. However, the elasticity of the wiper is not large enough to resist a crosswind flowing at the windshield surface while a car is driving, and thus two ends of the wiper are still affected by the crosswind and may be detached from the windshield. To overcome this problem, some related-art wipers have a convex ridge-shaped flow guiding cover mounted onto the top of the wipers and extended along a longitudinal direction of the wiper, and the flow guiding cover has a windward side with a gentler slope that the slope on a leeward side. When the crosswind flows along the windshield surface and passes through the windward slope, a component force acting on the windshield surface is produced to press the whole wiper.

The documents US 2013/117957 A1, JP 2011 240829 A, DE 101 30 381 A1 disclose different wiper designs.

However, the aforementioned pressing mechanism capable of pressing the whole wipe is still unable to overcome the issue of uneven forces acting at the center and both outer ends of the wiper, and the uneven forces make each part of the wiper blade to be deformed unevenly when pressed, thereby producing a gap between the wiper blade and the windshield surface easily, and failing to effectively scrape off the rainwater attached to the windshield surface.

In view of the aforementioned drawbacks, the inventor proposes this disclosure based on his expert knowledge and elaborate researches to overcome the drawbacks of the related art.

### SUMMARY OF THE DISCLOSURE

It is a primary object of this disclosure to overcome the drawbacks of the related art by providing a wiper with a flow guiding cover having a horizontal pressing rib in accordance with this disclosure.

In order to achieve the object mentioned above, this disclosure discloses a wiper including an elastic strip, a wiper blade and an flow guiding cover. The elastic strip is of a flat strip shape, and two surfaces of the elastic strip are defined as a bottom side and a top side respectively, and a connecting base is disposed on the center of the top side. The wiper blade is disposed corresponding to the bottom side. The flow guiding cover includes a cover of flat strip shape, and two surfaces of the cover are defined as an outer surface and an inner concave surface respectively, and the inner concave surface covers the top side and is extended from the connecting base to two ends of the elastic strip, and a plurality of pressing ribs is formed and protruded from the outer surface of the flow guiding cover, and each pressing rib is tilted with respect to the longitudinal direction of the elastic strip, and one side surface of each pressing rib is formed into a windward slope, and a side of an edge of the flow guiding cover is a windward side, and the windward side is disposed on a side of an edge of the elastic strip edge, and the windward slope is arranged toward the windward side.

According to the invention, the flow guiding cover includes an outer section and an inner section disposed on two ends of the connecting base respectively, and a tilt angle of each pressing rib on the outer section relative to the longitudinal direction of the elastic strip is less than a tilt angle of each pressing rib on the inner section relative to the longitudinal direction of the elastic strip, so that the reinforced pressure received by the outer section is greater than the reinforced pressure received by the inner section.

The quantity of pressing ribs on the outer section may be greater than the quantity of pressing ribs on the inner section.

In the wiper of this disclosure, each pressing rib has a cross section substantially in a non-isosceles triangular shape or an irregular trapezoidal shape. Each windward slope is a plane or a concave curved surface. Each pressing rib has a tilt angle relative to the longitudinal direction of the elastic strip less than about 90 degrees. The tilt angle may be about 45 degrees.

In the wiper of this disclosure, the flow guiding cover has at least one end, and the pressing rib on the flow guiding cover is close to the end of the flow guiding cover.

In the wiper of this disclosure, the pressing ribs are non-uniformly arranged along the longitudinal direction of the elastic strip. Any one of the pressing ribs in the longitudinal direction of the elastic strip is non-overlapped with the other adjacent pressing rib.

In summation of the description above, the wiper of this disclosure has the flow guiding cover with the horizontal pressing rib, and the pressing ribs are non-uniformly arranged along the longitudinal direction of the elastic strip and capable of partially applying different pressures at specific positions in the longitudinal direction of the elastic strip, so that the pressure in the longitudinal direction of the elastic strip may be distributed more uniformly to avoid a gap produced between the wiper blade and the windshield.

### BRIEF DESCRIPTION OF THE DRAWINGS

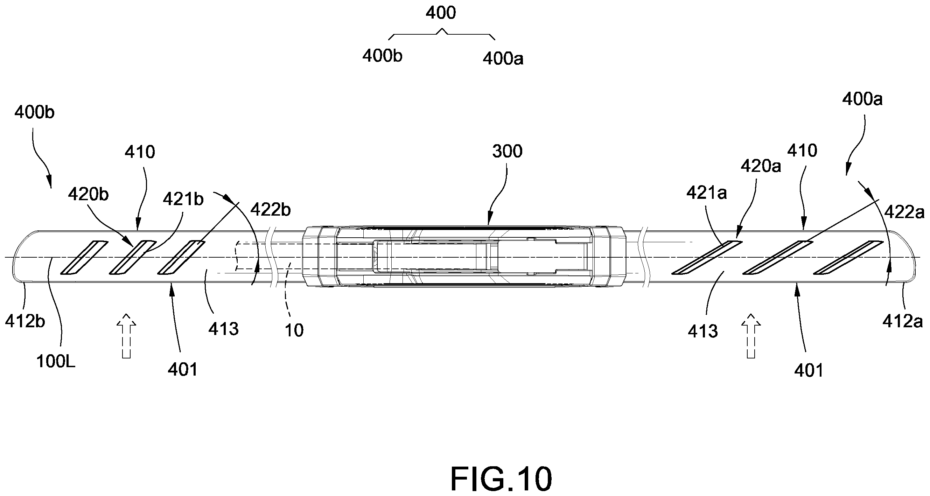

The features of the disclosure believed to be novel are set forth with particularity in the appended claims. The disclosure itself, however, may be best understood by reference to the following detailed description of the disclosure, which describes a number of exemplary embodiments of the disclosure, taken in conjunction with the accompanying drawings, in which the invention is shown in figure 10 :
FIG 1 is a schematic perspective view of a wiper of this disclosure;
FIG 2 is a schematic exploded view of a wiper of this disclosure;
FIG 3 is a schematic perspective view of a flow guiding cover of a wiper of this disclosure;
FIGS. 4 to 7 are schematic views showing various changes of the cross-sectional shape of a pressing rib of this disclosure;
FIGS. 8 to 11 are schematic views showing various configurations of a pressing rib of this disclosure; and
FIG 12 is a graph showing the distribution of pressure along the vertical axis of a wiper.

### DETAILED DESCRIPTION

The technical contents of this disclosure will become apparent with the detailed description of embodiments accompanied with the illustration of related drawings as follows. It is intended that the embodiments and drawings disclosed herein are to be considered illustrative rather than restrictive.

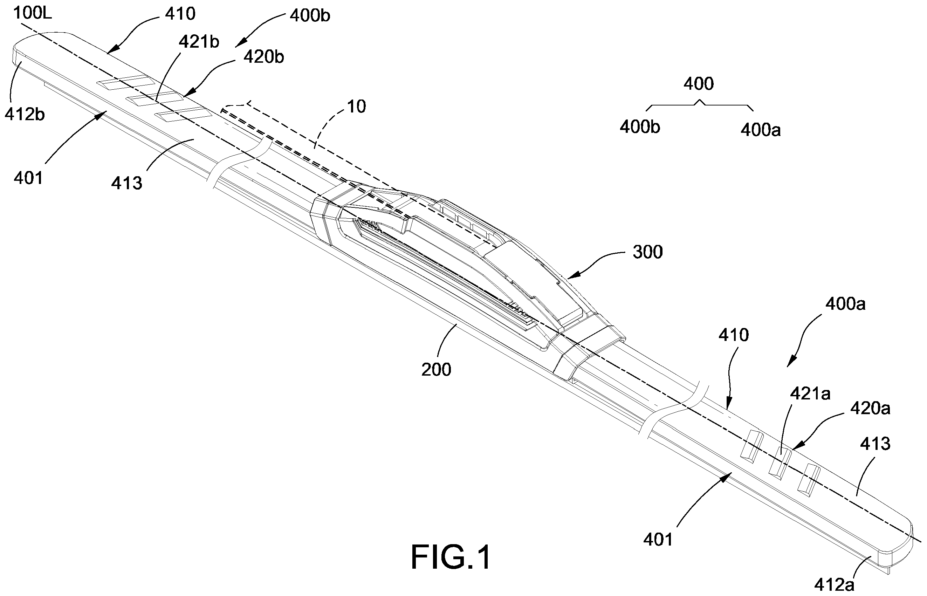

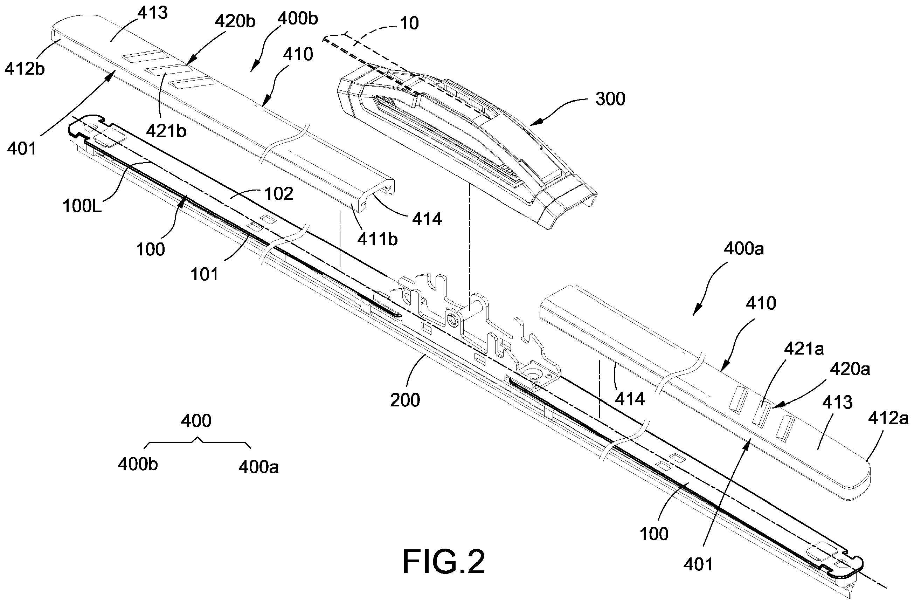

With reference to FIGS. 1 and 2 for a wiper in accordance with the embodiment of this disclosure, the wiper includes an elastic strip 100, a wiper blade 200, a connecting base 300 and a flow guiding cover 400.

The elastic strip 100 is a metal strip in a flat curved and elongated shape, and two surface of the elastic strip 100 are a concave bottom side 101 and a convex top side 102. The wiper blade 200 is a silicone strip, and the wiper blade 200 is disposed corresponding to the bottom side 101 of the elastic strip 100, and the connecting base 300 is disposed on the middle (center) of the top side 102 and provided for connecting a wiper arm 10. Specifically, the elastic strip 100 may be a single metal strip, or a strip with two sections successively connected to two ends of the connecting base 300. The wiper blade 200 is provided for attaching a windshield, and the wiper arm 10 may apply a force to press the elastic strip 100 at the windshield, so that the wiper blade 200 is attached to the windshield.

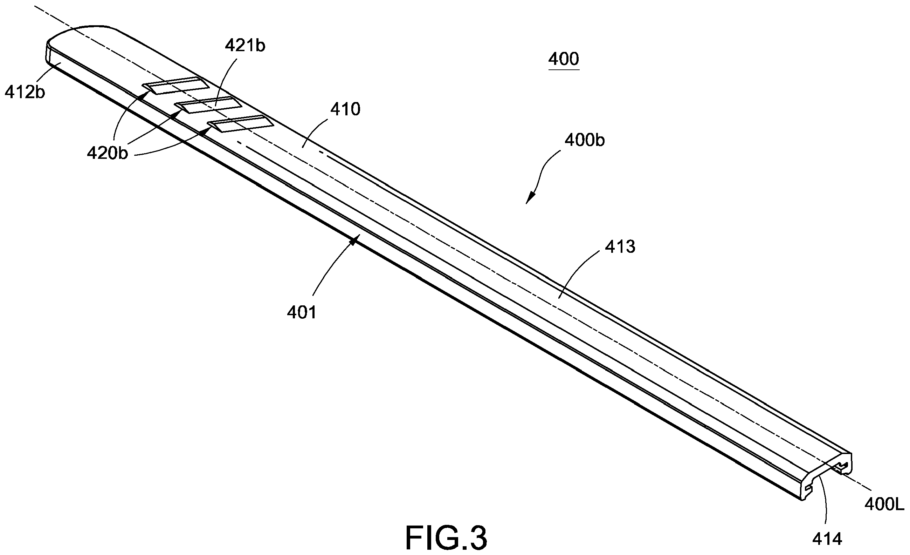

In FIGS. 1 to 3, the flow guiding cover 400 is a rubber or plastic cover, and the flow guiding cover 400 covers the top side 102 and is extended from the connecting base 300 to two ends of the elastic strip 100. Specifically, the flow guiding cover 400 includes an outer section 400a and an inner section 400b, and the inner section 400b and the wiper arm 10 are arranged to be substantially parallel to each other. Therefore, when the wiper arm 10 drives the wiper to swing, the wind speed at the outer section 400a is greater than that at the inner section 400b. The outer section 400a and the inner section 400b are disposed at two ends of the connecting base 300 respectively. In this embodiment, the outer section 400a and the inner section 400b are separated from each other, but this disclosure is not limited to such arrangement only. The outer section 400a and the inner section 400b may also be connected to each other and the connecting base 300 penetrates through the flow guiding cover 400 at the junction of the outer section 400a and the inner section 400b.

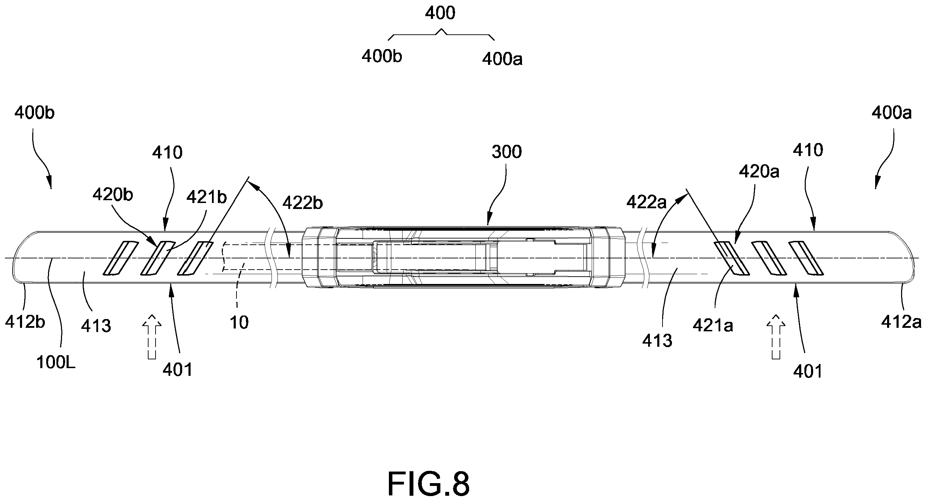

In this embodiment, the flow guiding cover 400 includes a cover 410 which is substantially a flat strip shape, and two surfaces of the cover 410 are an outer surface 413 and an inner concave surface 414, and the inner concave surface 414 of the cover 410 covers the top side 102 of the elastic strip 100, and the outer surface 413 of the cover 410 has a plurality of pressing ribs 420a, 420b protruded from the outer section 400a and the inner section 400b respectively, and each pressing rib 420a, 420b is tilted relative to the longitudinal direction 400L of the flow guiding cover 400. When the flow guiding cover 400 sheathes the elastic strip 100, the longitudinal direction 400L of the flow guiding cover 400 is parallel to the longitudinal direction 100L of the elastic strip 100. In other words, each pressing rib 420a, 420b is also tilted relative to the longitudinal direction 100L of the elastic strip 100 as shown in FIG 8, and the tilt angle 422a, 422b is greater than 0 degree and smaller than 90 degrees. In some embodiments, the tilt angle 422a, 422b may be 45 degrees. One side surface of each pressing rib 420a, 420b is formed into a windward slope 421a, 421b, and a side of an edge of the cover 410 is a windward side 401, and the windward slopes 421a, 421b are configured to be facing the windward side 401. When the wiper swings, each windward slope 421a, 421b receives the impact of a crosswind flowing along the windshield surface and produces a component force toward the windshield, so that the wiper blade 200 forms a positive pressure at the windshield to reinforce the pressure against the windshield.

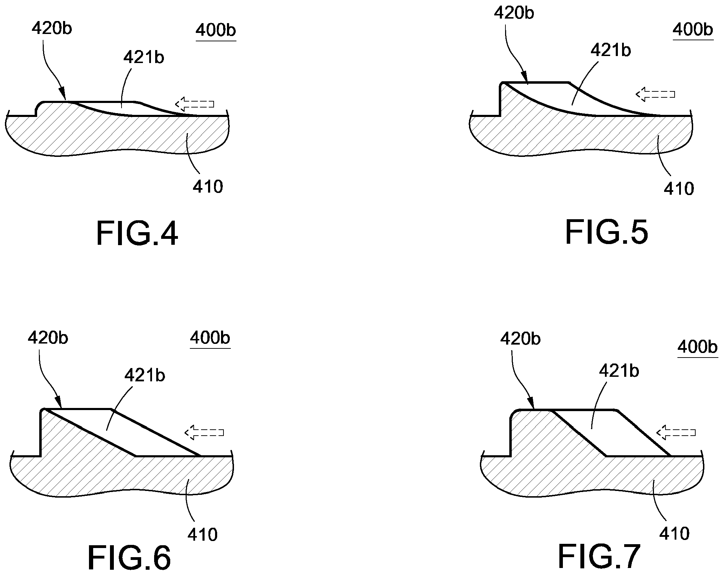

The pressing rib 420a, 420b has a cross section substantially in a convex ridged shape, and the two side slopes of the pressing ribs 420a, 420b are not the same, and the side of the pressing rib 420a, 420b with a milder slope is formed into a windward slope 421a, 421b, such as the inner section 400b (and the same applies to the outer section 400a). Specifically, the windward slope 421b may be a concave curved surface as shown in FIGS. 4 and 5, or a flat slope surface as shown in FIG 6 and 7. In other words, the cross section of the pressing rib 420b may be in a non-isosceles triangular shape or an irregular trapezoidal shape, so that the two side slopes of the pressing ribs 420a, 420b are not the same.

The pressing ribs 420a, 420b are non-uniformly arranged along the longitudinal direction 100L of the elastic strip 1. Specifically, the non-uniform configuration may be the non-uniform arrangement of the positions along the longitudinal direction 100L of the elastic strip 100, or the non-uniform configuration of the tilt angle of each pressing rib 420a, 420b relative to the longitudinal direction 100 L of the elastic strip 100 or the longitudinal direction 400L of the flow guiding cover 400 as described in the embodiment below.

In FIG 8, the pressing ribs 420a, 420b of the flow guiding cover 400 may be arranged to be close to the ends 412a, 412b of the flow guiding cover 400, and two ends of the elastic strip 100 may be deviated easily by wind pressure, so that the pressure at two ends of the elastic strip 100 may be reinforced and made to be approximate to the pressure at the center of the elastic strip 100.

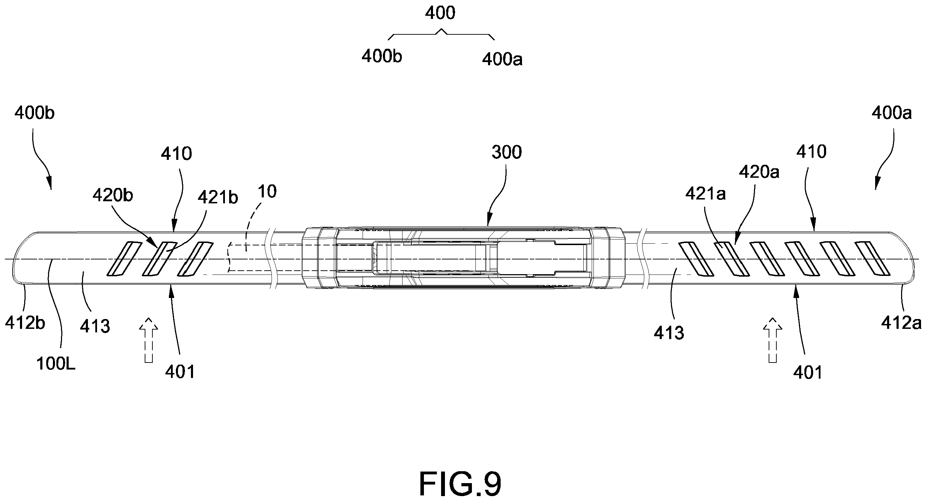

In FIG 9, the quantity of pressing ribs 420b on the outer section 400a is greater than the quantity of pressing ribs 420a on the inner section 400b. When the wiper swings, the outer section 400a is affected by a wind speed greater than the inner section 400b to have a greater deviation. In correspondence with the different quantities of pressing ribs 420a, 420b at two ends of the elastic strip 100, the reinforced pressure received by the outer section 400a is greater than that of the inner section 400b, so that two ends of the elastic strip 100 receive more uniform pressure.

In FIG 10, the tilt angle 422a of each pressing rib 420a on the outer section 400a relative to the longitudinal direction 100L of the elastic strip 100 is closer to the longitudinal direction 100L of the elastic strip 100 than each pressing rib 420b on the inner section 400b. In other words, the tilt angle 442a of each pressing rib 420a on the outer section 400a relative to the longitudinal direction 100L of the elastic strip 100 is less than the tilt angle 422b of each pressing rib 420b on the inner section 400b relative to the longitudinal direction 100L of the elastic strip 100. The closer the tilt angle 422a, 422b of the pressing rib 420a, 420b to the longitudinal direction 100L of the elastic strip 100, the greater the windage area in the crosswind direction, so that a greater wind pressure is received. The pressing ribs 420a, 420b corresponding to two ends of the elastic strip 100 have different tilt angles 422a, 422b, so that the reinforced pressure received by the outer section 400a is greater than the reinforced pressure received by the inner section 400b, so that two ends of the elastic strip 100 may receive more uniform pressure.

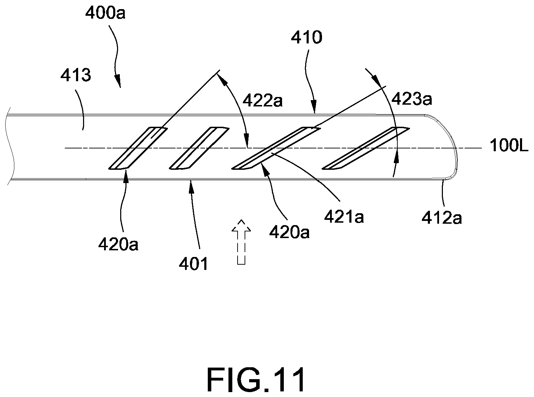

In FIG 11, the pressing rib 420b with its end 412 closer to the flow guiding cover 400 has a tilt angle 423a closer to the longitudinal direction 100L of the elastic strip 100. When the wiper swings, two ends of the elastic strip 100 have a greater deviation than the deviation at the center of the elastic strip 100. In the aforementioned configuration, a greater reinforced pressure is received at the position nearer to two ends of the elastic strip 100, so that the distribution of pressure in the longitudinal direction 100L of the elastic strip 100 may be more uniform.

In FIGS. 8 to 11, any one of the pressing ribs 420a, 420b in the longitudinal direction 100L of the elastic strip 100 is non-overlapped with another adjacent pressing rib 420a, 420b. In this way, each windward slope 421a, 421b in the crosswind direction is not be sheltered and may receive the wind pressure of the crosswind.

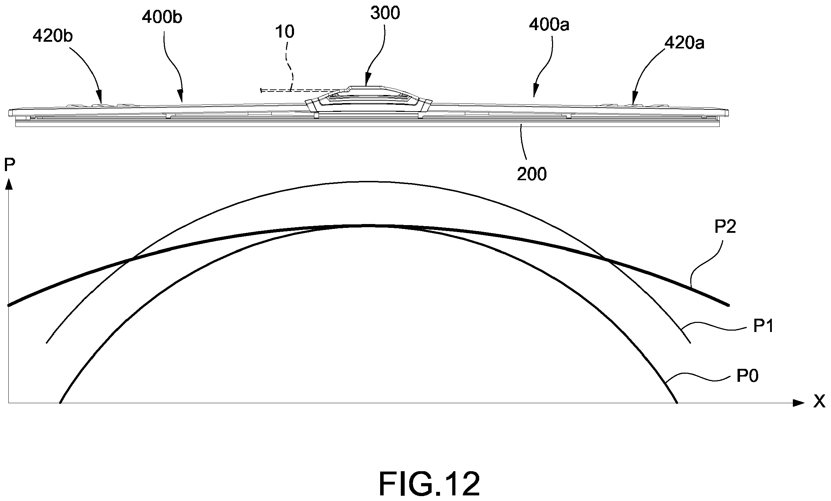

In summation of the description above, the wiper of this disclosure has the flow guiding cover 400 with the horizontal pressing ribs 420a, 420b, which are non-uniformly arranged along the longitudinal direction 100L of the elastic strip 100. With reference to FIG 12 for a graph showing the distribution of pressure along the vertical axis of a wiper, the related-art wiper without the pressing mechanism has a pressure P0 at two ends along the vertical axis x smaller than the pressure at the center. Although the related-art vertical pressing wiper may improve the total pressure of the distribution of P1 at two ends along the vertical axis x, the pressure at two ends is still lower than that at the center, and the distribution of the pressure is non-uniform. In addition, the related-art vertical pressing wiper usually has a reduced windward area for closing two ends of the wiper, so that the pressure is be applied effectively, and the pressure difference between the middle and two ends is further increased. On the other hand, the wiper of this disclosure may partially apply different pressures at specific positions along the longitudinal direction 100L of the elastic strip 100, so that the pressure P2 of the elastic strip 100 along its longitudinal axis x may be more uniform to avoid a gap produced between the wiper blade 200 and the windshield.

## Claims

1. A wiper, comprising:
an elastic strip (100), in a flat curved strip shape, comprising a bottom side (101) and a top side (102), and a connecting base (300) disposed on a center of the top side (102);
a wiper blade (200), disposed corresponding to the bottom side (101); and
a flow guiding cover (400), comprising a cover (410) of a flat strip shape, and the cover (410) comprising an outer surface (413) and an inner concave surface (414), and the inner concave surface (414) covering the top side (102) and extended from the connecting base (300) to two sides of the elastic strip (100), a plurality of pressing ribs (420a, 420b) protruding from the outer surface (413) of the flow guiding cover (400), and each of the pressing ribs (420a, 420b) disposed inclinedly relative to a longitudinal direction (100L) of the elastic strip (100), and a windward slope (421a, 421b) disposed on one side surface of each pressing rib (420a, 420b), and a side of the flow guiding cover (400) being a windward side (401), and the windward side (401) disposed on a side of the elastic strip (100), and the windward slope (421a, 421b) arranged toward the windward side (401),
wherein
the flow guiding cover (400) comprising an outer section (400a) and an inner section (400b), and the outer section (400a) and the inner section (400b) are disposed on two ends of the connecting base (300) respectively, **characterized in that** a tilt angle of each pressing rib (420a) on the outer section (400a) relative to the longitudinal direction (100L) of the elastic strip (100) is less than a tilt angle of each pressing rib (420b) on the inner section (400b) relative to the longitudinal direction (100L) of the elastic strip (100). (100), so that the reinforced pressure received by the outer section (400a) is greater than the reinforced pressure received by the inner section (400b).

2. The wiper according to claim 1, wherein a quantity of the pressing ribs (420a) on the outer section (400a) is greater than a quantity of pressing ribs (420b) on the inner section (400b).

3. The wiper according to claim 1, wherein each of the pressing ribs (420a, 420b) comprises a cross section substantially in a non-isosceles triangular shape or an irregular trapezoidal shape.

4. The wiper according to claim 1, wherein the windward slope (421a, 421b) is a plane or a concave curved surface.

5. The wiper according to claim 1, wherein each of the pressing ribs (420a, 420b) comprises a tilt angle relative to the longitudinal direction (100L) of the elastic strip (100) less than about 90 degrees.

6. The wiper according to claim 1, wherein the flow guiding cover (400) comprises at least one end (412a, 412b), and the pressing ribs (420a, 420b) on the flow guiding cover (400) are close to the end (412a, 412b).

7. The wiper according to claim 1, wherein the pressing ribs (420a, 420b) are non-uniformly arranged along the longitudinal direction (100L) of the elastic strip (100).

8. The wiper according to claim 1, wherein any one of the pressing ribs (420a, 420b) is non-overlapped with another one of the pressing ribs (420a, 420b) adjacent in the longitudinal direction (100L) of the elastic strip (100).

## Patentansprüche

1. Wischer, umfassend:
ein elastischer Streifen (100) in Form eines flachen, gebogenen Streifens, das eine Unterseite (101) und eine Oberseite (102) und eine Verbindungsbasis (300) aufweist, die in der Mitte der Oberseite (102) angeordnet ist;
ein Wischerblatt (200), das entsprechend der Unterseite (101) angeordnet ist; und
eine strömungsleitende Abdeckung (400), die eine Abdeckung (410) in Form eines flachen Streifens aufweist, wobei die Abdeckung (410) eine äußere Oberfläche (413) und eine innere konkave Oberfläche (414) aufweist und die innere konkave Oberfläche (414) die Oberseite (102) abdeckt und sich von der Verbindungsbasis (300) zu zwei Seiten des elastischen Streifens (100) erstreckt, wobei eine Vielzahl von Druckrippen (420a, 420b) von der äußeren Oberfläche (413) der strömungsleitenden Abdeckung (400) vorsteht, und jede der Druckrippen (420a, 420b) relativ zu einer Längsrichtung (100L) des elastischen Streifens (100) geneigt angeordnet ist, und eine windwärts gerichtete Schräge (421a, 421b), die auf einer Seitenfläche jeder Druckrippe (420a, 420b) angeordnet ist, und eine Seite der strömungsführenden Abdeckung (400) eine windwärts gerichtete Seite (401) ist, und die windwärts gerichtete Seite (401) auf einer Seite des elastischen Streifens (100) angeordnet ist und die windwärts gerichtete Schräge (421a, 421b) in Richtung der windwärts gerichtete Seite (401) angeordnet ist,
wobei die strömungsleitende Abdeckung (400) einen äußeren Abschnitt (400a) und einen inneren Abschnitt (400b) umfasst, und der äußere Abschnitt (400a) und der innere Abschnitt (400b) jeweils an zwei Enden der Verbindungsbasis (300) angeordnet sind, **dadurch gekennzeichnet, dass** ein Neigungswinkel jeder Druckrippe (420a) an dem äußeren Abschnitt (400a) relativ zu der Längsrichtung (100L) des elastischen Streifens (100) kleiner ist als ein Neigungswinkel jeder Druckrippe (420b) an dem inneren Abschnitt (400b) relativ zu der Längsrichtung (100L) des elastischen Streifens (100). (100), so dass der verstärkte Druck, der von dem äußeren Abschnitt (400a) aufgenommen wird, größer ist als der verstärkte Druck, der von dem inneren Abschnitt (400b) aufgenommen wird.

2. Wischer nach Anspruch 1, wobei eine Anzahl der Druckrippen (420a) am äußeren Abschnitt (400a) größer ist als eine Anzahl von Druckrippen (420b) am inneren Abschnitt (400b).

3. Wischer nach Anspruch 1, wobei jede der Druckrippen (420a, 420b) einen Querschnitt im Wesentlichen in Form eines nicht gleichschenkligen Dreiecks oder einer unregelmäßigen Trapezform aufweist.

4. Wischer nach Anspruch 1, wobei die windzugewandte Schräge (421a, 421b) eine Ebene oder eine konkav gekrümmte Fläche ist.

5. Wischer nach Anspruch 1, wobei jede der Druckrippen (420a, 420b) einen Neigungswinkel relativ zur Längsrichtung (100L) des elastischen Streifenes (100) von weniger als etwa 90 Grad aufweist.

6. Wischernach Anspruch 1, wobei die strömungsführende Abdeckung (400) mindestens ein Ende (412a, 412b) aufweist und die Druckrippen (420a, 420b) an der strömungsführenden Abdeckung (400) nahe dem Ende (412a, 412b) angeordnet sind.

7. Wischer nach Anspruch 1, wobei die Druckrippen (420a, 420b) ungleichmäßig entlang der Längsrichtung (100L) des elastischen Streifenes (100) angeordnet sind.

8. Wischernach Anspruch 1, wobei eine der Druckrippen (420a, 420b) nicht mit einer anderen, in Längsrichtung (100L) des elastischen Streifens (100) benachbarten Druckrippe (420a, 420b) überlappt ist.

## Revendications

1. Une essuie-glace comprenant:
une bande élastique (100) sous la forme d'une bande plate et incurvée, ayant une face inférieure (101) et une face supérieure (102) et une base de connexion (300) disposée au centre de la face supérieure (102);
une lame d'essuyage (200) disposée en correspondance avec la face inférieure (101); et
un couvercle de guidage d'écoulement (400) comprenant un couvercle (410) sous la forme d'une bande plate, le couvercle (410) ayant une surface extérieure (413) et une surface concave intérieure (414), la surface concave intérieure (414) couvrant la surface supérieure (102) et s'étendant depuis la base de connexion (300) vers deux côtés de la bande élastique (100), dans lequel une pluralité de nervures de compression (420a, 420b) font saillie depuis la surface extérieure (413) du couvercle de guidage d'écoulement (400), et chacune des nervures de compression (420a, 420b) est disposée de manière inclinée par rapport à une direction longitudinale (100L) de la bande élastique (100), et une pente orientée vers le vent (421a, 421b) disposée sur une surface latérale de chaque nervure de pression (420a, 420b), et un côté du couvercle de guidage d'écoulement (400) est
un côté (401) orienté vers le vent, et le côté (401) orienté vers le vent est disposé sur un côté de la bande élastique (100) et la pente (421a, 421b) orientée vers le vent est disposée vers le côté (401) orienté vers le vent,
dans lequel le couvercle de guidage d'écoulement (400) comprend
une partie extérieure (400a) et une partie intérieure (400b), et la partie extérieure (400a) et la partie intérieure (400b) sont disposées respectivement à deux extrémités de la base de connexion (300), **caractérisé en ce que en ce qu'**un angle d'inclinaison de chaque nervure de compression (420a) sur la partie extérieure (400a) par rapport à la direction longitudinale (100L) de la bande élastique (100) est inférieur à un angle d'inclinaison de chaque nervure de compression (420b) sur la partie intérieure (400b) par rapport à la direction longitudinale (100L) de la bande élastique (100). (100), de sorte que la pression renforcée reçue par la partie extérieure (400a) est supérieure à la pression renforcée reçue par la partie intérieure (400b).

2. L'essuie-glace selon la revendication 1, dans lequel un nombre de nervures de pression (420a) sur la partie extérieure (400a) est supérieur à un nombre de nervures de pression (420b) sur la partie intérieure (400b).

3. L'essuie-glace selon la revendication 1, dans lequel chacune des nervures de pression (420a, 420b) a une section transversale sensiblement en forme de triangle non isocèle ou de trapèze irrégulier.

4. L'essuie-glace selon la revendication 1, dans lequel la pente (421a, 421b) orientée vers le vent est un plan ou une surface incurvée concave.

5. L'essuie-glace selon la revendication 1, dans lequel chacune des nervures de pression (420a, 420b) présente un angle d'inclinaison par rapport à la direction longitudinale (100L) de la bande élastique (100) inférieur à environ 90 degrés.

6. L'essuie-glace selon la revendication 1, dans lequel le couvercle de guidage de l'écoulement (400) a au moins une extrémité (412a, 412b) et les nervures de pression (420a, 420b) sont disposées sur le couvercle de guidage de l'écoulement (400) à proximité de l'extrémité (412a, 412b).

7. L'essuie-glace selon la revendication 1, dans lequel les nervures de pression (420a, 420b) sont disposées de manière non uniforme le long de la direction longitudinale (100L) de la bande élastique (100).

8. L'essuie-glace selon la revendication 1, dans lequel l'une des nervures de pression (420a, 420b) n'est pas chevauchée par une autre nervure de pression (420a, 420b) adjacente dans la direction longitudinale (100L) de la bande élastique (100).
